(19) Europäisches Patentamt
European Patent Office
Office européen des brevets

(11) **EP 4 718 399 A1**

(12) **EUROPEAN PATENT APPLICATION**
published in accordance with Art. 153(4) EPC

(43) Date of publication:
01.04.2026 Bulletin 2026/14

(21) Application number: 25745251.6

(22) Date of filing: 24.01.2025

(51) International Patent Classification (IPC):
*G06V 30/412* (2022.01)   *G06V 10/776* (2022.01)
*G06T 11/20* (2026.01)   *G06N 3/0455* (2023.01)

(52) Cooperative Patent Classification (CPC):
G06F 16/2365; G06N 3/0455; G06T 11/20;
G06V 10/776; G06V 30/412

(86) International application number:
PCT/KR2025/001511

(87) International publication number:
WO 2025/159585 (31.07.2025 Gazette 2025/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.01.2024 KR 20240011847

(71) Applicant: LG Management Development Institute
Co., Ltd.
Seoul 07336 (KR)

(72) Inventors:
• RYOO, Kwangrok
Seoul 07788 (KR)
• LEE, Seungjun
Gimpo-si, Gyeonggi-do 10099 (KR)
• LEE, Soonyoung
Seoul 06299 (KR)

(74) Representative: BCKIP Part mbB
Landsberger Straße 98
80339 München (DE)

(54) **SYSTEM, METHOD, AND PROGRAM FOR EVALUATING PERFORMANCE OF CHART DE-RENDERING MODEL USING ARTIFICIAL INTELLIGENCE**

(57) A system, method, and program for evaluating performance of an artificial intelligence model capable of extracting information of a chart by de-rendering the chart are disclosed. The system includes a memory including an AI model and a performance evaluation model, and a processor that executes or trains the AI model and executes the performance evaluation model, wherein the AI model outputs at least one data format including meta information or data information included in the image of a chart by decoding an image of the chart stored in a test set, and the performance evaluation model outputs a result of evaluating the performance of the AI model. The performance evaluation model may output a performance evaluation result by comparing information included in the data format with ground truth (GT) including information about the chart stored in the test set, and more specifically, the performance evaluation result may include a line accuracy, an axis accuracy, a meta accuracy, and a length accuracy.

Fig. 4a

(Cont. next page)

Fig. 4b

**Description**

[Technical Field]

The present invention relates to a system, method, and program for evaluating the performance of a model that extracts information of a chart by de-rendering the chart, and more particularly, the present invention relates to a system, a method, and a program for evaluating the performance of an artificial intelligence model capable of extracting information of a chart by de-rendering the chart.

[Background Art]

Charts included in papers, reports, textbooks, and the like are generally generated through a process of transmitting data tables set as numbers and groups, code defining an overall layout (e.g., type, orientation, color/shape configuration), and the like to a rendering engine.

Chart de-rendering is a process opposite to chart rendering, and refers to an operation extracting key information by analyzing and grouping visual patterns or information of a chart, and extracting information about data (e.g., numbers, groups, etc.), information about chart layout, etc. from the key information.

As a representative prior art related to accuracy evaluation for information of the chart extracted as results of the chart de-rendering, relative number set similarity (RNSS) is disclosed (DePlot: One-shot visual language reasoning by plot-to-table translation, Fangyu Liu et al., 2023, page 3). When there are data points predicted through de-rendering and ground truth (GT) representing information of actual data points, first, the RNSS calculates a distance (D) between the GT and the closest predicted data point therefrom as follows.

$$D(p,t) = \min(1, \frac{\left|\left|p - t\right|\right|}{\left|\left|t\right|\right|})$$

Here, the final accuracy evaluation score is calculated by summing all the distances (D) calculated as below, dividing the sum by the number of data points of the one having more data points among the predicted data or the GT, and then subtracting the value from 1.

$$\text{RNSS} = 1 - \frac{\sum_{i=1}^{N} \sum_{j=1}^{M} X_{ij} D(p_i, t_j)}{\max(N, M)}$$

Although the RNSS has been proven to be useful for evaluating performance in data sets composed of a small number of data points, since it only considers the distance between data points without considering data indices, it has a limitation in accurately representing the characteristics of the chart.

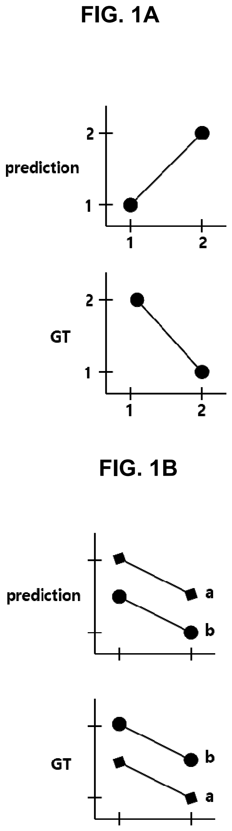

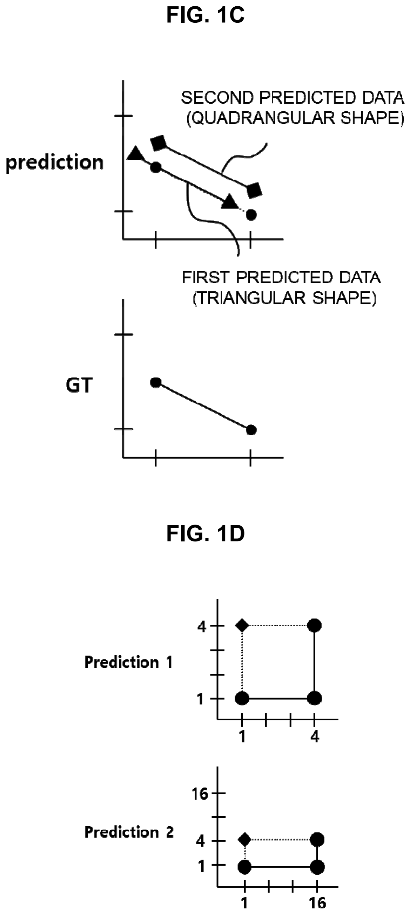

For example, in FIG. 1A, the actual GT is a chart heading toward the lower right, but the AI model predicted a chart heading toward the upper right, and in FIG. 1B, the actual GT is a chart in which chart a is located below chart b, but the AI model predicted the positions of chart a and chart b in reverse. As such, in FIGS. 1A and 1B, even though the data predicted by the AI model does not match the GT, so the data is incorrectly predicted, since the sum of distances between points in the predicted data and points of the chart included in the GT may be zero, the RNSS, which does not consider the data indices, cannot distinguish this and may evaluate the accuracy about the predicted data as 100%. In addition, as shown in FIG. 1C, since the first predicted data (triangular shape) is located on the GT (circular shape), the first predicted data (triangular shape) should be evaluated as more accurate than the second predicted data (quadrangular shape), but according to the RNSS, the first predicted data (triangular shape) and the second predicted data (quadrangular shape) are spaced by the same distance (D) from the GT (circular shape), so they are evaluated as having the same accuracy. Furthermore, in FIG. 1D, since Prediction 2 is visually closer to the GT value than Prediction 1, Prediction 2 should be evaluated as a more accurate prediction, but the RNSS evaluates the accuracy using only numbers (e.g., Y-axis values), so the accuracy of (A) and (B) is derived as the same.

Prior Art Document Non-Patent Literature (Non-Patent Literature 1) DePlot: One-shot visual language reasoning by plot-to-table translation, Fangyu Liu et al., 2023. Page 3

[Disclosure]

[Technical Problem]

An object of the present invention is directed to providing a system, method, and program capable of more objectively evaluating the performance of a model that extracts information of a chart by de-rendering the chart.

Objects of the present invention are not limited to the above-described object, and other objects that are not mentioned will be clearly understood by those skilled in the art from the following description.

[Technical Solution]

A system for evaluating the accuracy of a chart de-rendering model according to the present invention may include at least one processor, and at least one memory storing a command or information that causes the at least one processor to perform an operation, wherein the operation performed by the command may include inputting an image of a chart stored in a test set into an AI model to output a data format in which information of the chart is predicted, and inputting the data format into a performance evaluation model to output a performance evaluation result for the AI model by comparing information of the data format with ground truth (GT), which is information about the chart stored in the test set, wherein the performance evaluation result may include a line accuracy indicating a degree of proximity between a chart according to the information of the data format and a chart according to the GT, and an axis accuracy indicating a degree of overlap between a range in which the chart according to the information of the data format is distributed and a range in which the chart according to the GT is distributed on at least one axis of the chart.

In the system, the line accuracy may be a parameter obtained by fixing an axis area formed by an X-axis or a Y-axis of the chart according to the information of the data format and the chart according to the GT to a specific value, and comparing the axis area with an area between a line of the chart according to the information of the data format and a line of the chart according to the Gt.

In the system, the degree of overlap of the axis accuracy may be a proportion that an overlapping part between a range of an X-axis on which the chart according to the information of the data format is distributed and a range of the X-axis on which the chart according to the GT is distributed occupies in an entire range of the range of the X-axis on which the chart according to the information of the data format is distributed and the range of the X-axis on which the chart according to the GT is distributed.

In the system, the performance evaluation result may further include a meta accuracy, and the meta accuracy may be a degree of match between meta information included in the data format and meta information included in the GT.

In the system, the meta accuracy may be calculated using a character error rate (CER).

In the system, the performance evaluation result may further include a length accuracy, and the length accuracy may be a difference between a length of the chart according to the information of the data format and a length of the chart according to the GT.

A method for evaluating the accuracy of a chart de-rendering model according to the present invention may include inputting an image of a chart stored in a test set into an image encoder to convert the image into a first embed processable by an AI model, inputting the first embed into the AI model to output at least one data format including meta information or data information included in the image of the chart, and inputting the data format into a performance evaluation model to output a performance evaluation result by comparing information included in the data format with ground truth (GT) including information about the chart stored in the test set, wherein the performance evaluation result may be determined according to a line accuracy indicating a degree of proximity between a line of a chart according to the information included in the data format and a line of a chart according to the GT, and an axis accuracy indicating a degree of overlap between a range in which the chart according to the information included in the data format is distributed and a range in which the chart according to the GT is distributed on at least one axis of the chart.

In the method, the line accuracy may be a parameter obtained by fixing an axis area formed by an X-axis or a Y-axis of the chart according to the information included in the data format and the chart according to the GT to a specific value, and comparing the axis area with an area between a line of the chart according to the information of the data format and a line of the chart according to the Gt.

In the method, the degree of overlap of the axis accuracy may be a proportion that an overlapping part between a range of an X-axis on which the chart according to the information included in the data format is distributed and a range of the X-axis on which the chart according to the GT is distributed occupies in an entire range of the range of the X-axis on which the chart according to the information included in the data format is distributed and the range of the X-axis on which the chart according to the GT is distributed.

In the method, the performance evaluation result may further include a meta accuracy, and the meta accuracy may be a degree of match between meta information included in the data format and meta information included in the GT.

In the method, the meta accuracy may be calculated using a character error rate (CER).

In the method, the performance evaluation result may further include a length accuracy, and the length accuracy may be a difference between a length of the chart according to the information included in the data format and a length of the chart according to the GT.

A program according to another aspect of the present invention may be stored in a computer-readable recording medium to implement a model for evaluating the accuracy of a chart de-rendering model according to the embodiments of the present invention, in conjunction with a computer.

[Advantageous Effects]

According to the present invention, the characteristics of a model can be quantitatively and objectively evaluated by separating and evaluating evaluation parameters having orthogonality.

In addition, according to the present invention, how accurately an AI model predicts a shape of a chart can be objectively evaluated by indicating how closely lines of output charts are in contact with lines of charts included in ground truth (GT) under the same conditions between the AI models using a line accuracy.

In addition, according to the present invention, how widely the AI model can predict the chart can be evaluated using the axis accuracy.

In addition, according to the present invention, how correctly the AI model recognizes meta information can be objectively evaluated using a meta accuracy.

In addition, according to the present invention, how evenly the AI model predicts the shape of the chart may be objectively evaluated using a length accuracy.

Effects of the present invention are not limited to the above-described effects, and other effects that are not mentioned will be clearly understood by those skilled in the art from the following description.

[Description of Drawings]

FIGS. 1A to 1D are examples of chart de-rendering results that are subjects of performance evaluation.

FIG. 2 is a schematic diagram of a system for implementing a performance evaluation method of a chart de-rendering model using artificial intelligence according to one embodiment of the present disclosure.

FIG. 3 is a block diagram for explaining a configuration of a device performing the performance evaluation method of the chart de-rendering model using artificial intelligence according to one embodiment of the present disclosure.

FIG. 4 is a block diagram for explaining a method for evaluating the performance of an artificial intelligence model that de-renders a chart according to embodiments of the present invention.

FIGS. 5 to 7 are examples comparing charts output from an AI model and charts included in GT.

[Modes of the Invention]

The following embodiments are provided as examples so that the spirit of the present invention can be sufficiently conveyed to those skilled in the art to which the present invention pertains. Therefore, the present invention is not limited to the embodiments described below and may be specified in other forms.

The same reference numerals refer to the same components throughout the present invention. The present invention does not describe all elements of the embodiments, and common content in the art to which the present invention pertains or content that overlaps between the embodiments will be omitted. Terms such as "unit," "module," "member," and "block" used in the specification may be implemented as software or hardware, and according to the embodiments, a plurality of "units," "modules," "members," and "blocks" may be implemented as one component, or one "unit," "module," "member," and "block" may also include a plurality of components.

Throughout the specification, when a first component is described as being "connected" to a second component, this includes not only a case in which the first component is directly connected to the second component but also a case in which the first component is indirectly connected to the second component, and the indirect connection includes connection through a wireless communication network.

In addition, when a certain portion is described as "including" a certain component, it means further including other components rather than precluding other components unless specifically stated otherwise.

Throughout the present specification, when a first member is described as being positioned "on" a second member, this includes both a case in which the first member is in contact with the second member and a case in which a third member is present between the two members.

Terms such as first and second are used to distinguish one component from another, and the components are not limited by the above-described terms.

A singular expression includes plural expressions unless the context clearly dictates otherwise.

In each operation, identification symbols are used for convenience of explanation, and the identification symbols do not describe the sequence of each operation, and each operation may be performed in a different sequence from the specified sequence unless a specific sequence is clearly described in context.

A system for evaluating performance of a chart de-rendering model according to the present invention may include a device, and the device may include all types of devices capable of performing computation processing and providing results to a user. For example, the system for evaluating the performance of the chart de-rendering model according to the present invention may include at least one of a computer, a server device, and a portable terminal, or may be implemented in any one form having the same or similar functions thereof. However, the present invention is not limited thereto.

Here, the computer may include, for example, a notebook, a desktop, a laptop, a tablet PC, a slate PC, etc., which are equipped with a web browser.

The server device is a server that processes information in communication with an external device, and may include an application server, a computing server, a database server, a file server, a game server, a mail server, a proxy server, and a web server.

The portable terminal is, for example, a wireless communication device ensuring portability and mobility and may include all kinds of handheld-based wireless communication devices such as a personal communication system (PCS), a global system for mobile communications (GSM), a personal digital cellular (PDC), a personal handyphone system (PHS), a personal digital assistant (PDA), international mobile telecommunication-2000 (IMT-2000), code division multiple access-2000 (CDMA-2000), w-code division multiple access (W-CDMA), a wireless broadband internet (WiBro) terminal, a smart phone, and wearable devices such as a watch, a ring, a bracelet, an anklet, a necklace, glasses, contact lenses, or a head-mounted device (HMD).

Hereinafter, embodiments of the present invention will be described in detail with reference to the accompanying drawings.

The present invention relates to a system, method, and program for evaluating the performance of a model that extracts information of a chart by de-rendering the chart, and more particularly, the present invention relates to a system, a method, and a program for evaluating the performance of an artificial intelligence model capable of extracting information of a chart by de-rendering the chart.

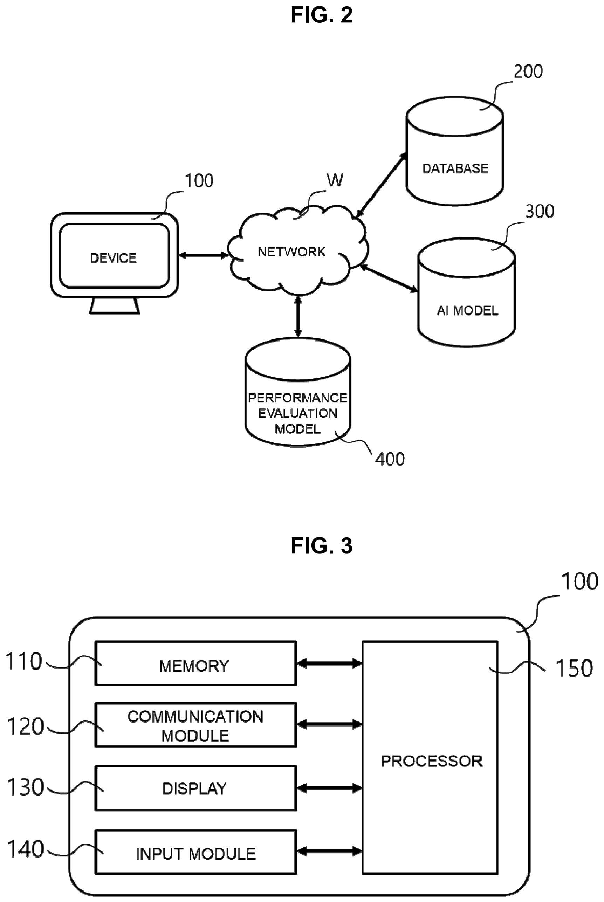

FIG. 2 is a schematic diagram of a system capable of implementing a method for evaluating the performance of a model that de-renders a chart according to one embodiment of the present invention.

As shown in FIG. 2, a system 1000 may include a device 100, a database 200, an AI model 300, and a performance evaluation model 400.

The device 100, the database 200, the AI model 300, and the performance evaluation model 400 included in the system 1000 may perform communication via a network W. Here, the network W may include a wired network and a wireless network. For example, the network may include various networks such as a local area network (LAN), a metropolitan area network (MAN), and a wide area network (WAN).

In addition, the network W may also include the well-known world wide web (WWW). However, the network W according to embodiments of the present invention is not limited to the above-listed networks and may include, at least in part, a well-known wireless data network, a well-known telephone network, or a well-known wired and wireless television network.

The device 100 may input the chart into the AI model 300 and output information about the chart, and may evaluate the performance of the AI model 300 using the performance evaluation model 400 based on the output information about the chart.

A test set composed of an image of the chart including text, lines, etc., ground truth (GT) including information about the chart, and the like is input into an AI model 300. The test set is the same as what is generally used to train the AI model or evaluate its performance, but is not limited thereto. A form of the chart included in the test set may include a vertical/horizontal bar chart, a line chart, a pie chart, an area chart, a scatter chart, a radar chart, a histogram, and/or a waterfall chart. The form of the chart may be a single form or a combined form of a plurality of forms. However, the chart used in the present invention is not limited thereto, and the chart may include any form of chart. In addition, the chart may include text information in addition to information (e.g., a line, a circle, etc.) that visualizes numerical values, etc., and specifically, may include annotation information of the chart, a legend or title of the chart, a name of each axis (e.g., an X-axis, a Y-axis, a Z-axis, etc.), numerical values of raw data of points included in the chart (e.g., numerical values of the X-axis and the Y-axis of points included in the chart), etc.

The information about the chart output from the AI model 300 may be information that represent features of the chart and include meta information, data information, etc. The meta information may include names of the X-axis and Y-axis, a name of an entity group recorded in the legend, etc. The data information may include numerical values of the X-axis and/or Y-axis of each entity, etc.

The information about the chart output from the AI model 300 is input into the performance evaluation model 400, and the performance evaluation model 400 evaluates the performance of the AI model 300 by comparing the output information about the chart with the GT included in the data set.

A performance evaluation result output from the performance evaluation model 400 indicates how accurately the AI model predicts the chart. The performance evaluation result may be represented as a score expressed in numerical form, a diagram expressed in image form, and the like, but is not limited thereto. The performance evaluation result may be separately output for each individual parameter value, and the individual parameter values may include a line accuracy, an axis accuracy, a meta accuracy, or a length accuracy, but are not limited thereto.

According to the present invention, the device 100 may output a performance evaluation result for the AI model that de-renders the input chart.

The database 200 may store various data (e.g., a test set) for training the AI model 300 or evaluating its performance. In addition, the database 200 may store a chart image, the information about the chart, information about a performance evaluation method, etc., and in various embodiments, may also store output data output by the AI model 300. However, the system 1000 may not include the database 200 when the training of the AI model 300 is completed.

FIG. 2 shows a case in which the database 200 is implemented outside the device 100. In this case, the database 200 may be connected to the device 100 in a wired or wireless communication manner. However, this is only one embodiment, and the database 200 may also be implemented as one component of the device 100.

FIG. 2 shows a case in which the AI model 300 is implemented outside the device 100 (e.g., implemented in a cloud-based manner), but is not limited thereto, and may be implemented as one component of the device 100.

FIG. 3 is a block diagram for explaining a configuration of a device that performs a method for evaluating the performance of an artificial intelligence model capable of extracting information of the chart by de-rendering the chart according to one embodiment of the present invention.

As shown in FIG. 3, the device 100 may include a memory 110, a communication module 120, a display 130, an input module 140, and a processor 150. However, the present invention is not limited thereto, and software and hardware components of the device 100 may be modified/added/omitted according to a required operation within a scope obvious to those skilled in the art. In addition, the device 100 may be replaced with a system, and the device 100 may include a plurality of devices, and in this case, each component included in the device 100 may be included in at least one of the plurality of devices.

The memory 110 may store data supporting various functions of the device 100 and a program for the operation of the processor 150, store input/output data, and store a plurality of application programs or applications that are driven on the present device, data, command, and the AI model for the operation of the device 100. At least some of the application programs may be downloaded from an external server via wireless communication.

Such memory 110 may include at least one type of storage medium among a flash memory type, a hard disk type, a solid state disk type (SSD type), a silicon disk drive type (SDD type), a multimedia card micro type, a card-type memory (e.g., an SD or XD memory), a random access memory (RAM), a static random access memory (SRAM), a read-only memory (ROM), an electrically erasable programmable ROM (EEPROM), a programmable ROM (PROM), a magnetic memory, a magnetic disk, and an optical disk.

In addition, the memory 110 may be separate from the device, and may include a database that is connected in a wired or wireless communication manner. The database 200 shown in FIG. 2 may be implemented as one component of the memory 110.

The communication module 120 may include one or more components that enable communication with an external device, and may include at least one of, for example, a broadcasting reception module, a wired communication module, a wireless communication module, a short-range communication module, or a position information module.

The wired communication module may include not only various wired communication modules such as a local area network (LAN) module, a wide area network (WAN) module, and a value added network (VAN) module, but also various cable communication modules such as a universal serial bus (USB), a high definition multimedia interface (HDMI), a digital visual interface (DVI), a recommended standard 232 (RS-232), power line communication, and plain old telephone service (POTS).

In addition to the WiFi module and the wireless broadband (WiBro) module, the wireless communication module may include a wireless communication module for supporting various wireless communication methods such as global system for mobile communication (GSM), code division multiple access (CDMA), wideband CDMA (WCDMA), universal mobile telecommunications system (UMTS), time division multiple access (TDMA), long term evolution (LTE), 4G, 5G, or 6G.

The display 130 displays (outputs) information or data that are processed in the device 100, data that are input or output through the AI model 300, etc. In addition, the display 130 may display execution screen information of an application program (e.g., an application) driven on the device 100, or user interface (UI) or graphic user interface (GUI) information according to such execution screen information.

The input module 140 is for receiving information from a user, and when the user inputs information through an input unit, the processor 150 may control the operation of the device 100 to correspond to the input information.

The input module 140 may include a hardware physical key (e.g., a button located on at least one of a front surface, a back surface, and a side surface of the device, a dome switch, a jog wheel, a jog switch, etc.) and a software touch key. As an example, the touch key may be formed as a virtual key, a soft key, or a visual key that is displayed on a touchscreen type of the display 130 through software processing or may be formed as the touch key disposed in a portion other than the touchscreen. Meanwhile, the virtual key or visual key may have various forms and may be displayed on the touchscreen, and may be formed as, for example, a graphic, text, an icon, a video, or a combination thereof.

The processor 150 may be implemented with a memory that stores data for an algorithm for controlling the operations (including training or execution of the AI model) of the components in the device 100 or a program that reproduces the algorithm, and at least one processor (not shown) that performs the above-described operation using the data stored in the memory. In this case, the memory and the processor may each be implemented as separate chips or may be implemented as a single chip.

In one embodiment, the system 1000 or the device 100 according to the present invention may include at least one processor, and when including a plurality of processors, the plurality of processors may be included in different devices 100.

In addition, the processor 150 may control the operations of the components by combining any one or a plurality of the above-described components in order to implement various embodiments according to the present disclosure, which will be described below, on the device 100.

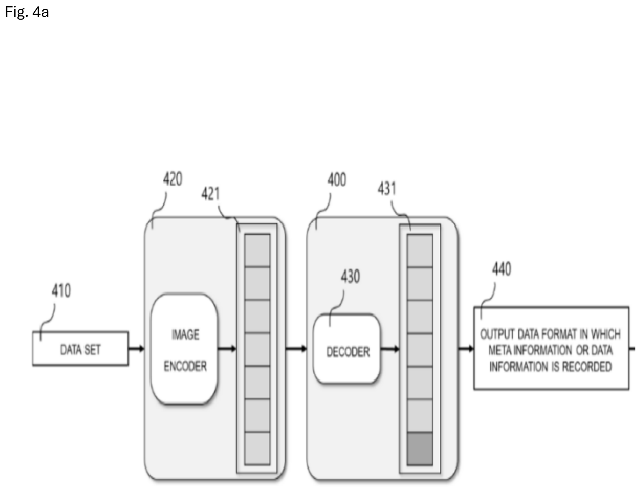

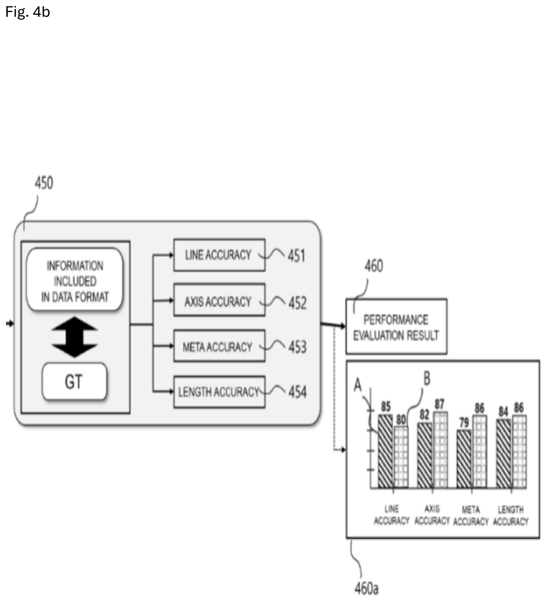

FIG. 4 is a block diagram for explaining a method for evaluating the performance of a model that extracts the information of the chart by de-rendering the chart according to an embodiment of the present invention.

Referring to FIG. 4, a test set 410 composed of an image of the chart including text, lines, etc. and ground truth (GT) including information about the chart, is input into an image encoder 420. Here, the image of the chart includes a title, an axis name, legend information, numerical values, and the like. A form of the chart 410 may be a vertical/horizontal bar chart, a line chart, a pie chart, an area chart, a scatter chart, a radar chart, a histogram, and/or a waterfall chart, but is not limited thereto. In addition, the form of the chart may be a single form or a combined form of a plurality of forms.

The image encoder 420 follows a generally used encoder architecture and serves to convert the input chart 410a into a first embed 421 that may be processed by the AI model 300. Here, the first embed 421 may include a concatenate embed.

Next, the first embed 421 output from the image encoder 420 is input into the AI model 400 including a decoder 430 that performs meta decoding, data decoding, and the like. The decoder 430 decodes the input first embed 421 to extract meta information (e.g., chart title, X-axis name, Y-axis name, legend), data information (e.g., data point numerical values, etc.) of the chart, and the like, and outputs the meta information and the data information as a second embed 431.

As such, the AI model may ultimately output a data format 440 including the meta information, the data information, and the like, from the output second embed 431.

Next, the data format 440 output from the AI model is input into a chart de-rendering performance evaluation model 450. The chart de-rendering performance evaluation model 450 compares the information of the chart in the data format 440 (e.g., chart title, X-axis name, Y-axis name, legend, data point numerical values, etc.) with the GT included in the data set 410, and calculates parameter values for deriving a performance evaluation result 460 according to a predetermined method. The calculated parameter values reflect information about data indices, and specifically may include a line accuracy 451, an axis accuracy 452, a meta accuracy 453, a length accuracy 454, etc., but are not limited thereto.

The performance evaluation model 450 individually or collectively outputs the calculated parameter values as the performance evaluation result 460 indicating how accurately the AI model predicts the chart. The performance evaluation result 460 may be represented as a score expressed in a numerical form, a graph expressed in an image form, and the like, but is not limited thereto. The performance evaluation result 460 may be separately output for each individual parameter value, and the individual parameter values may include the line accuracy 451, the axis accuracy 452, the meta accuracy 453, or the length accuracy 454, etc. described above, but are not limited thereto. For example, the performance evaluation result 460 may be represented as a performance evaluation result 460a.

Therefore, according to the present invention, the characteristics of the model may be quantitatively and objectively evaluated by separating and evaluating evaluation parameters having orthogonality.

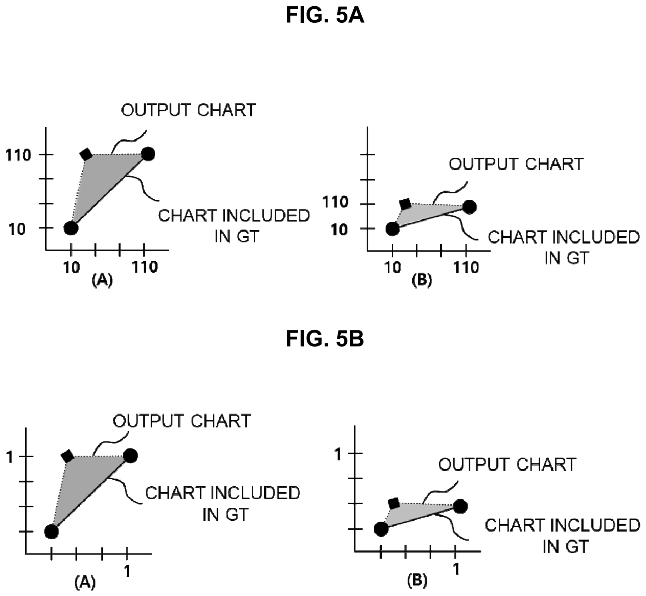

Hereinafter, the parameter values used to derive the performance evaluation result 460 will be described in detail with reference to FIGS. 5 to 7.

The line accuracy 451 is a parameter indicating a degree of proximity between a line of the chart output from the AI model and a line of the chart included in the GT, and through the line accuracy 451, how accurately the AI model predicts a shape of the chart may be evaluated. Specifically, the line accuracy 451 is a parameter obtained by fixing an area (axis area) formed by an X-axis or a Y-axis of the chart to a specific value (e.g., fixing the area of the X-axis*Y-axis of the chart to 1*1), and comparing a value of the corresponding area value with an area between the line of the output chart and the line of the chart included in the GT.

More specifically, referring to the example shown in FIG. 5A of comparing charts output from AI model (A) and AI model (B) with the chart included in the GT, it can be seen that model B, in which the line of the chart output from the AI is closer to the line of the chart included in the GT, predicts the shape of the chart more accurately than model A. However, when calculating the area (i.e., a part marked with a triangular shadow in the chart) between the line of the chart output from each of AI model (A) and AI model (B) and the line of the chart included in the GT using the X-axis and Y-axis values, this area appears the same in both models. As such, when the area formed by the X-axis or the Y-axis of the chart output from AI model (A) and AI model (B) is not fixed, the area between the line of the output chart and the line of the chart included in the GT may not be compared under the same conditions due to the difference in scales of the X-axis or the Y-axis. Furthermore, due to this, it is difficult to compare which AI model more accurately predicts the shape of the chart.

To solve this problem, as shown in FIG. 5B, for the charts output from AI model (A) and AI model (B), the area formed by the X-axis or the Y-axis is identically fixed to a constant (= 1*1). The line accuracy 451 may be calculated using the proportion that the area (a part marked with a triangular shadow in the chart) between the line of the output chart and the line of the chart included in the GT occupies in the fixed chart area (=1). By calculating and comparing the line accuracy 451 for each AI model in this way, it is possible to compare under the same conditions how closely the line of the chart output from each AI model is in contact with the line of the chart included in the GT (i.e., how small the proportion of the area separated between the charts is in the total area).

More preferably, the line accuracy 451 may be calculated by the following formula.

$$\text{Line Accuracy} = \begin{cases} 1 - \int_l |P - T|\, dx & \text{if } l \neq \emptyset \\ \text{otherwise } 0 \end{cases}, \qquad l = dom(P) \cap dom(T)$$

Here, P denotes the function followed by the output chart, and T denotes the function followed by the chart included in the GT. In addition, dom denotes the domain followed by each function (P and T). According to the above formula, the line accuracy 451 may be calculated by subtracting the area (a part with a triangular shadow) formed between the line of the output chart and the line of the chart included in the GT from the area (in the case of FIG. 5B, "1") formed by the X-axis or the Y-axis of the chart, and the model with a greater value of the line accuracy 451 may be evaluated as having more accurate performance in predicting the shape of the chart. For example, in FIGS. 5A and 5B, since the area (a part with a triangular shadow) between the charts compared to the total area (1) is smaller in model B than in model A, a value of the line accuracy 451 is greater in model B, and accordingly, model B may be evaluated as predicting the shape of the chart more accurately than model A.

Therefore, according to the present invention, how accurately the AI model predicts the shape of the chart may be objectively evaluated by indicating how closely the lines of the output charts are in contact with the lines of the charts included in the GT under the same conditions between the AI models using the line accuracy 451.

Meanwhile, the axis accuracy 452 is a parameter indicating a degree of overlap between a range in which the chart output from the AI is distributed and a range in which the chart included in the GT is distributed on at least one axis of the chart, and through the axis accuracy 452, whether the output chart is predicting the chart in a sufficient range may be evaluated. Even when the output chart is predicted to be adjacent to the chart included in the GT, the corresponding AI model may not provide useful values over a wide range when a range followed by the output chart is not wide. Therefore, it is necessary to evaluate whether the AI model predicts the chart over a sufficient range using the axis accuracy 452.

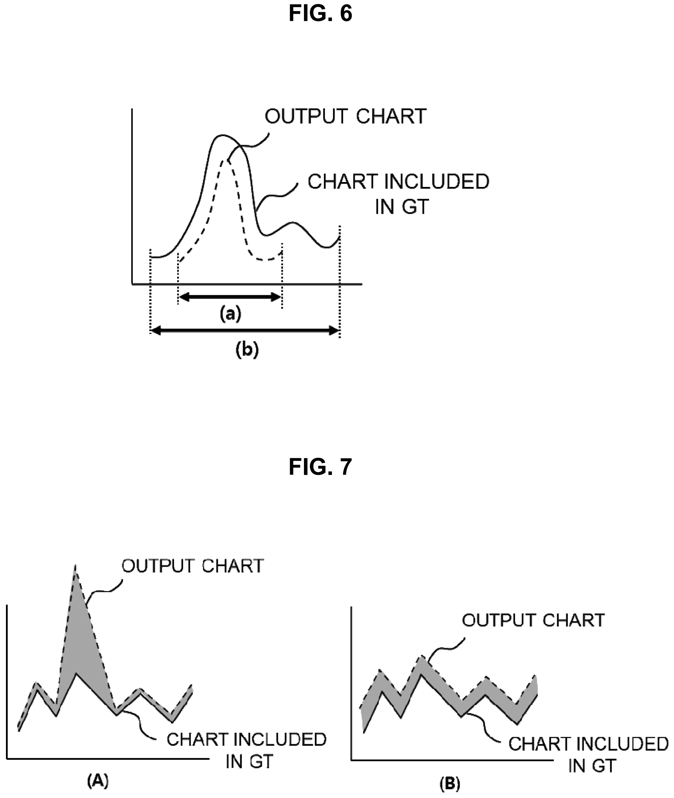

More specifically, as shown in FIG. 6, a value of the axis accuracy 452 is calculated as the proportion that the overlapping part (a) of a range of the X-axis in which the chart output from the AI is distributed and a range of the X-axis in which the chart included in the GT is distributed occupies in the entirety (b) of the range of the X-axis in which the chart output from the AI is distributed and the range of the X-axis in which the chart included in the GT is distributed (i.e., the higher the value of the axis accuracy 452, the wider the range over which the AI model may be evaluated to predict the chart).

More preferably, the line accuracy may be calculated by the following formula.

$$\text{Axis Accuracy} = \frac{m(dom(P) \cap dom(T))}{m(dom(P) \cup dom(T))}$$

Here, P denotes the function followed by the output chart, and T denotes the function followed by the chart included in the GT. In addition, dom denotes the domain followed by each function (P and T), and m denotes a Lebesgue measure. According to the above formula, the axis accuracy 452 may be calculated as the proportion that the overlapping part of the range of the X-axis in which the chart output from the AI is distributed and the range of the X-axis in which the chart included in the GT is distributed occupies in the entirety of the range of the X-axis in which the chart output from the AI is distributed and the range of the X-axis in which the chart included in the GT is distributed.

Therefore, according to the present invention, how widely the AI model can predict the chart may be evaluated using the axis accuracy 452.

Meanwhile, the meta accuracy 453 is a parameter value for evaluating whether the meta information of the chart output from the AI model has been correctly recognized. The meta (e.g., chart title, axis label, legend, etc.) information included in the output from the chart de-rendering AI model plays an important role in providing insights to a user using the output result, so it is necessary to evaluate how correctly the AI model recognizes the meta information.

Preferably, the meta accuracy 453 may be calculated using a character error rate (CER). The CER may be calculated as follows.

$$\mathrm{CER} = \frac{(S + D + I)}{N} = \frac{(S + D + I)}{(S + D + C)}$$

Here, S denotes the number of substitution characters, D denotes the number of deletion characters, I denotes the number of insertion characters, C denotes the number of correct characters, and N denotes the total number of reference characters (= S + D + C). According to this, a lower CER value indicates a better recognition rate, and when the meta information is perfectly recognized, the CER is 0.

More specifically, the meta accuracy 453 may be calculated using the CER as follows.

$$\mathbf{Meta\ Accuracy} = \mathbf{1} - \min(\mathbf{1}, \mathrm{CER}(S_p, S_t))$$

According to this, the higher the meta accuracy 453, the more accurately the AI model may be evaluated as predicting the meta information.

Therefore, according to the present invention, how correctly the AI model recognizes the meta information may be objectively evaluated using the meta accuracy 453.

Meanwhile, the length accuracy 454 is a parameter indicating whether the chart output from the AI model significantly deviates from the chart included in the GT at a specific point, and through the length accuracy 454, how accurately the AI model predicts the shape of the chart may be evaluated.

Specifically, referring to FIG. 7, the chart output from AI model (A) significantly deviates from the chart included in the GT at a specific point, while AI model (B) almost exactly follows the shape of the chart included in the GT. Accordingly, AI model (B) may be evaluated as predicting the shape of the chart more accurately. In order to more accurately evaluate the performance of the AI model reflecting this point, the length accuracy 454 reflecting the difference in length between the chart output from the AI model and the chart included in the GT may additionally be considered in the performance evaluation result. That is, by assigning a higher length accuracy 454 as the difference in length between the output chart and the chart included in the GT becomes smaller, whether the AI model evenly predicts the shape of the chart may be evaluated. For example, in FIG. 7, since a length of the chart of AI model (B) is shorter than length of the chart of AI model (A), a value of accuracy 454 is greater, and accordingly, AI model (B) may be evaluated as more evenly predicting the shape of the chart than AI model (A).

Preferably, the length accuracy 454 may be calculated by the following formula.

$$\mathbf{Length\ Accuracy} = \max\left(0, 1 - \frac{|L_P - L_T|}{L_T}\right)$$

$$\begin{cases} L_P = \int_I \sqrt{1 + \{P'(x)\}^2}\, \mathrm{dx} \\ L_T = \int_I \sqrt{1 + \{T'(x)\}^2}\, \mathrm{dx} \\ I = dom(P) \cap dom(T) \end{cases}$$

Here, P denotes the function followed by the output chart, and T denotes the function followed by the chart included in the GT. In addition, dom denotes the domain followed by each function (P and T). According to the above formula, the length accuracy 454 may be calculated by subtracting the sum of the length ($L_P$) of the output chart and the length ($L_T$) of the chart included in the GT from 1, and the model with a greater value of the length accuracy 454 may be evaluated as having more accurate performance in evenly predicting the shape of the chart.

Therefore, according to the present invention, how evenly the AI model predicts the shape of the chart may be objectively evaluated using the length accuracy 454.

Meanwhile, the method for evaluating the performance of the model that extracts the information of the chart by de-rendering the chart, according to embodiments of the present invention may be implemented by the system described with reference to FIG. 4.

AI models according to embodiments of the present invention may be controlled, executed, trained, driven, etc. by the processor, and accordingly, at least one of the tasks of executing, training, and driving the AI models may be performed by at least one processor. In addition, the AI models may be stored in the memory, and the feature data according to the present invention may also be stored in memory.

Meanwhile, disclosed embodiments may be implemented in the form of a recording medium in which computer-executable commands are stored. The commands may be stored in the form of program code, and when executed by the processor, program modules may be generated to perform operations of the disclosed embodiments. The recording medium may be implemented as a computer-readable recording medium.

The computer-readable recording medium includes all types of recording media in which computer-decodable commands are stored. For example, there may be a read only memory(ROM), a random access memory(RAM), a magnetic tape, a magnetic disk, a flash memory, an optical data storage device, and the like.

As described above, the disclosed embodiments have been described with reference to the accompanying drawings. Those skilled in the art to which the present disclosure pertains will understand that the present disclosure may be implemented in different forms from the disclosed embodiments without departing from the technical spirit or essential features of the present disclosure. The disclosed embodiments are illustrative and should not be construed as being limited.

**Claims**

1. A system for implementing a model for evaluating accuracy of a chart de-rendering model, the system comprising:

   at least one processor; and
   at least one memory storing a command or information that causes the at least one processor to perform an operation,
   wherein the operation performed by the command includes:

   inputting an image of a chart stored in a test set into an AI model to output a data format in which information of the chart is predicted; and
   inputting the data format into a performance evaluation model to output a performance evaluation result for the AI model by comparing information of the data format with ground truth (GT), which is information about the chart stored in the test set,
   wherein the performance evaluation result includes:

   a line accuracy indicating a degree of proximity between a chart according to the information of the data format and a chart according to the GT; and
   an axis accuracy indicating a degree of overlap between a range in which the chart according to the information of the data format is distributed and a range in which the chart according to the GT is distributed on at least one axis of the chart.

2. The system of claim 1, wherein the line accuracy is a parameter obtained by fixing an axis area formed by an X-axis or a Y-axis of the chart according to the information of the data format and the chart according to the GT to a specific value, and comparing the axis area with an area between a line of the chart according to the information of the data format and a line of the chart according to the Gt.

3. The system of claim 1, wherein the degree of overlap of the axis accuracy is a proportion that an overlapping part between a range of an X-axis on which the chart according to the information of the data format is distributed and a range of the X-axis on which the chart according to the GT is distributed occupies in an entire range of the range of the X-axis on which the chart according to the information of the data format is distributed and the range of the X-axis on which the chart according to the GT is distributed.

4. The system of claim 1, wherein the performance evaluation result further includes a meta accuracy, and the meta accuracy is a degree of match between meta information included in the data format and meta information included in the GT.

5. The system of claim 4, wherein the meta accuracy is calculated using a character error rate (CER).

6. The system of claim 1, wherein the performance evaluation result further includes a length accuracy, and the length accuracy is a difference between a length of the chart according to the information of the data format and a length of the chart according to the GT.

7. A method for implementing a model for evaluating accuracy of a chart de-rendering model, the method comprising:

   inputting an image of a chart stored in a test set into an image encoder to convert the image into a first embed processable by an AI model;
   inputting the first embed into the AI model to output at least one data format including meta information or data information included in the image of the chart; and
   inputting the data format into a performance evaluation model to output a performance evaluation result by comparing information included in the data format with ground truth (GT) including information about the chart stored in the test set.
   wherein the performance evaluation result is determined according to:

   a line accuracy indicating a degree of proximity between a line of a chart according to the information included in the data format and a line of a chart according to the GT; and
   an axis accuracy indicating a degree of overlap between a range in which the chart according to the information included in the data format is distributed and a range in which the chart according to the GT is distributed on at least one axis of the chart.

8. The method of claim 7, wherein the line accuracy is a parameter obtained by fixing an axis area formed by an X-axis or a Y-axis of the chart according to the information included in the data format and the chart according to the GT to a specific value, and comparing the axis area with an area between a line of the chart according to the information of the data format and a line of the chart according to the Gt.

9. The method of claim 7, wherein the degree of overlap of the axis accuracy is a proportion that an overlapping part between a range of an X-axis on which the chart according to the information included in the data format is distributed and a range of the X-axis on which the chart according to the GT is distributed occupies in an entire range of the range of the X-axis on which the chart according to the information included in the data format is distributed and the range of the X-axis on which the chart according to the GT is distributed.

10. The method of claim 7, wherein the performance evaluation result further includes a meta accuracy, and the meta accuracy is a degree of match between meta information included in the data format and meta information included in the GT.

11. The method of claim 10, wherein the meta accuracy is calculated using a character error rate (CER).

12. The method of claim 7, wherein the performance evaluation result further includes a length accuracy, and the length accuracy is a difference between a length of the chart according to the information included in the data format and a length of the chart according to the GT.

13. A program stored in a computer-readable recording medium to execute the method of any one of claims 7 to 12 in conjunction with a computer.

## FIG. 1A

## FIG. 1B

## FIG. 1C

SECOND PREDICTED DATA
(QUADRANGULAR SHAPE)

prediction

FIRST PREDICTED DATA
(TRIANGULAR SHAPE)

GT

## FIG. 1D

Prediction 1

Prediction 2

# FIG. 2

# FIG. 3

Fig. 4a

Fig. 4b

# FIG. 5A

# FIG. 5B

# FIG. 6

OUTPUT CHART

CHART INCLUDED IN GT

(a)

(b)

# FIG. 7

OUTPUT CHART

CHART INCLUDED IN GT

(A)

OUTPUT CHART

CHART INCLUDED IN GT

(B)

## INTERNATIONAL SEARCH REPORT

| | International application No. |
|---|---|
| | **PCT/KR2025/001511** |

**A. CLASSIFICATION OF SUBJECT MATTER**

**G06V 30/412**(2022.01)i; **G06V 10/776**(2022.01)i; **G06T 11/20**(2006.01)i; **G06N 3/0455**(2023.01)i

According to International Patent Classification (IPC) or to both national classification and IPC

**B. FIELDS SEARCHED**

Minimum documentation searched (classification system followed by classification symbols)

G06V 30/412(2022.01); G06F 16/9032(2019.01); G06K 9/62(2006.01); G06N 3/04(2006.01); G06N 3/08(2006.01); G06N 5/02(2006.01); G06N 7/00(2006.01); G06V 30/19(2022.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 차트 디-렌더링 모델(chart de-rendering model), 정확도(accuracy), 차트 이미지 (chart image), AI 모델(artificial intelligence model), 예측(prediction), 성능 평가 모델(performance evaluation model), GT(ground truth), 근접(proximity), 중첩(overlap)

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0107458 A (MAKINAROCKS CO., LTD.) 01 September 2021 (2021-09-01)<br>See claims 1 and 18. | 1-13 |
| A | KR 10-2023-0154601 A (TMAXAI CO., LTD.) 09 November 2023 (2023-11-09)<br>See paragraphs [0052]-[0075]; and figures 3-6b. | 1-13 |
| A | KR 10-2022-0049932 A (KOREA ELECTRONICS TECHNOLOGY INSTITUTE) 22 April 2022 (2022-04-22)<br>See paragraphs [0030]-[0061]; and figures 4-7. | 1-13 |
| A | KR 10-2023-0171842 A (LBOX CO., LTD.) 21 December 2023 (2023-12-21)<br>See paragraphs [0050]-[0066]; and figure 3. | 1-13 |

☑ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 April 2025** | **25 April 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2025/001511** |

**C.    DOCUMENTS CONSIDERED TO BE RELEVANT**

| Category* | Citation of document, with indication, where appropriate, of the relevant passages | Relevant to claim No. |
|---|---|---|
| A | US 2022-0245199 A1 (INTERNATIONAL BUSINESS MACHINES CORPORATION) 04 August 2022 (2022-08-04) <br> See paragraphs [0029]-[0048]; and figures 1-2. | 1-13 |

**INTERNATIONAL SEARCH REPORT**
**Information on patent family members**

International application No.

**PCT/KR2025/001511**

| Patent document cited in search report | | | Publication date (day/month/year) | Patent family member(s) | | | Publication date (day/month/year) |
|---|---|---|---|---|---|---|---|
| KR | 10-2021-0107458 | A | 01 September 2021 | KR | 10-2023-0065970 | A | 12 May 2023 |
| | | | | KR | 10-2531645 | B1 | 11 May 2023 |
| | | | | US | 11226893 | B2 | 18 January 2022 |
| | | | | US | 11636026 | B2 | 25 April 2023 |
| | | | | US | 2021-0263839 | A1 | 26 August 2021 |
| | | | | US | 2022-0100648 | A1 | 31 March 2022 |
| KR | 10-2023-0154601 | A | 09 November 2023 | | None | | |
| KR | 10-2022-0049932 | A | 22 April 2022 | KR | 10-2559574 | B1 | 26 July 2023 |
| KR | 10-2023-0171842 | A | 21 December 2023 | KR | 10-2445036 | B1 | 22 September 2022 |
| | | | | KR | 10-2674472 | B1 | 13 June 2024 |
| | | | | KR | 10-2674472 | B9 | 11 October 2024 |
| US | 2022-0245199 | A1 | 04 August 2022 | CN | 116806339 | A | 26 September 2023 |
| | | | | EP | 4285275 | A1 | 06 December 2023 |
| | | | | JP | 2024-506519 | A | 14 February 2024 |
| | | | | US | 11714855 | B2 | 01 August 2023 |
| | | | | WO | 2022-161745 | A1 | 04 August 2022 |

Form PCT/ISA/210 (patent family annex) (July 2022)